# FASCICULE DE BREVET EUROPEEN

(11) **EP 1 402 161 B1**
(45) Date de publication et mention de la délivrance du brevet: **13.09.2006**
(21) Numéro de dépôt: 02764915.1
(22) Date de dépôt: 11.06.2002
(51) Int. Cl.: F02C 6/00, F02C 3/04, B01D 53/14

(54) **GENERATEUR DE PUISSANCE A FAIBLES REJETS DE CO2 ET PROCEDE ASSOCIE**
ENERGIEERZEUGER MIT GERINGEN CO2-EMISSIONEN UND ZUGEHÖRIGES VERFAHREN
POWER GENERATOR WITH LOW CO2 EMISSIONS AND ASSOCIATED METHOD

(30) Priorité: 14.06.2001 FR 0108000
(43) Date de publication de la demande: 31.03.2004
(73) Titulaire: Institut Français du Pétrole, 92852 Rueil-Malmaison Cedex (FR)
(72) Inventeur: LEBAS, Etienne, F-38200 Seyssuel (FR); ROJEY, Alexandre, F-92500 Reuil-Malmaison (FR); MARTIN, Gérard, F-69230 Saint Genis Laval (FR)
(86) Numéro de dépôt international: PCT/FR2002/001998
(87) Numéro de publication internationale: WO 2002/103176

(56) Documents cités:
- EP-B- 0 744 987
- WO-A-97/07329
- DE-A- 19 728 151
- US-A- 5 175 995

## Description

La présente invention concerne le domaine des générateurs de puissance et plus particulièrement celui des turbines à gaz.

De façon plus précise, elle décrit un procédé et un dispositif associé permettant de diminuer de façon sensible le taux de dioxyde de carbone (CO2) présent dans les fumées à la sortie du générateur avant leur évacuation dans l'atmosphère, sans affecter sensiblement le rendement de celui-ci.

Il est généralement admis que le taux de CO2 présent dans l'atmosphère s'élève régulièrement en raison de l'augmentation sans cesse croissante de l'utilisation comme source d'énergie des combustibles dits « fossiles » comme le charbon, les hydrocarbures liquides ou les hydrocarbures gazeux comme le gaz naturel.

Il a été également établi que la combustion de ces combustibles est, en grande partie, à l'origine de l'effet de serre et du réchauffement global de la planète constaté depuis quelques décennies.

Il est ainsi impératif, pour limiter l'effet de serre dans les années futures, de développer et de mettre en oeuvre de nouvelles méthodes (et dispositifs) de captation du CO2 avant leur rejet final.

Dans le domaine des générateurs thermiques, une première solution consiste à prélever le CO2 présent dans les fumées de combustion avant le rejet de celles ci dans l'atmosphère.
Les méthodes utilisées sont basées généralement sur la cryogénie, l'absorption par un moyen chimique ou physique ou encore l'utilisation de membranes.
Les fortes quantités de fumées à traiter ainsi que les faibles pressions partielles de CO2 dans lesdites fumées, elles-mêmes étant sensiblement à la pression atmosphérique, expliquent que ces solutions sont cependant complexes et coûteuses à mettre en oeuvre.

D'autres technologies ont été proposées plus récemment pour limiter les émissions finales de CO2. Parmi celles ci on peut citer par exemple :
- la conversion du combustible en hydrogène (H2) et en dioxyde de carbone (CO2) par reformage ou oxydation partielle avant l'étape de combustion.
   Ce procédé a pour avantage d'augmenter la pression totale et la pression partielle en CO2 dans les produits gazeux issus de l'étape de reformage. Ceci permet ensuite une séparation plus aisée du dioxyde de carbone et de l'hydrogène, la fraction gazeuse, enrichie en hydrogène et sensiblement exempte de CO2, étant brûlée ensuite dans une turbine à gaz.
   Un tel procédé est par exemple décrit dans les demandes de brevet internationales WO 99/41188 et WO 00/18680.
   Cependant, un inconvénient majeur de ce type de procédé est lié à l'étape de reformage très coûteuse en énergie et qui par conséquent diminue fortement le rendement énergétique global d'une installation fonctionnant selon un tel procédé. En outre, le dispositif dans sa totalité est volumineux, coûteux et complexe à mettre en oeuvre car il inclut à la fois une unité de reformage, une unité de séparation et un générateur thermique.
- la séparation préalable de l'azote moléculaire (N2) et de l'oxygène (O2) contenus dans l'air de combustion en amont de celle ci.
   La combustion est ainsi effectuée en présence d'oxygène sensiblement pur et les fumées de combustion contiennent essentiellement du CO2 et de la vapeur d'eau. Après récupération de l'énergie par détente des fumées chaudes, le dioxyde de carbone est séparé de l'eau, une partie des fumées étant généralement recyclée pour diluer l'oxygène.
   Un procédé basé sur ce principe est par exemple décrit dans la demande de brevet internationale WO 97/07329 mais la faisabilité économique de cette méthode est cependant limitée par le coût important de l'installation permettant la séparation entre l'oxygène et l'azote moléculaire.

D'autres procédés ont également été proposés récemment.
- la demande de brevet international WO 00/57990 propose, par exemple, d'effectuer la combustion avec une partie de l'air issu du compresseur. Les fumées résultantes de ladite combustion traversent ensuite un dispositif d'absorption du CO2 fonctionnant également sous pression.
   Ce procédé a pour avantage d'augmenter la pression partielle en dioxyde de carbone et de diminuer le volume total du gaz à traiter par l'unité d'absorption.
   Cependant, il impose que les fumées issues de la combustion (à une température généralement supérieure à 1000°C) soient refroidies, à une température comprise entre 30 et 120°C, pour permettre les conditions de ladite absorption puis réchauffées après cette absorption à une température comprise entre 800 et 900°C à travers un échangeur.
   Outre les difficultés techniques posées par de telles conditions (notamment de réalisation et de coût d'un tel échangeur), le rendement énergétique global de l'installation est faible en raison des pertes thermiques inévitables générées par un tel procédé et de la faible température d'entrée des gaz dans la turbine de détente.
- le brevet EP 744 987-B1 propose la recirculation d'une partie des fumées (environ 40%) issues de la combustion avec l'air de combustion, l'autre partie étant envoyée vers une colonne d'absorption du CO2.
   Cette technique permet d'augmenter sensiblement le taux de CO2 présent dans lesdites fumées mais l'augmentation de la teneur en CO2 apparaît cependant limitée.
   De plus, l'extraction du CO2 dans la fraction non recyclée des fumées est effectuée à la pression ambiante et donc sur un volume gazeux important et entraînera nécessairement les problèmes de coût et d'encombrement.

La présente invention se propose de remédier aux inconvénients mentionnés ci-dessus grâce à un procédé et un générateur de puissance permettant d'éliminer une grande partie du CO2 présent dans les fumées générées par la chambre de combustion d'une manière simple et efficace.

Selon l'invention, un procédé permettant de diminuer le taux de dioxyde de carbone (CO2) présent dans les fumées rejetées par un générateur de puissance brûlant un mélange d'un comburant et d'un combustible contenant des hydrocarbures est caractérisé en ce qu'il comprend au moins les étapes suivantes :
a) on comprime un mélange gazeux comprenant au moins une partie dudit comburant et au moins une partie desdites fumées,
b) on élimine par absorption tout ou partie du CO2 présent dans le mélange gazeux comprimé,
c) on mélange un combustible avec le mélange gazeux et on fait brûler ce mélange combustible/mélange gazeux,
d) on détend les fumées issues de la combustion.

Avantageusement, on peut mélanger avec le comburant au moins une partie des fumées issues de l'étape d) pour former le mélange gazeux de l'étape a).

De manière alternative, on peut effectue l'étape b) d'absorption entre deux étages successifs de compression du mélange gazeux.

Avantageusement, on peut effectuer l'étape b) d'absorption à la sortie du compresseur.

De manière préférentielle, on peut recycler au moins 40% du volume total des fumées refroidies.

Selon un mode de réalisation, on peut effectuer dans l'étape c) une combustion catalytique.

Selon un autre mode, on peut mélanger avec les fumées recyclées, sensiblement la quantité d'oxygène stoechiométrique nécessaire à la combustion.

Dans le procédé selon l'invention, le comburant peut être de l'air ou de l'air enrichi en oxygène

L'invention se rapporte également à un générateur de puissance brûlant un mélange d'un comburant et d'un combustible contenant des hydrocarbures et rejetant des fumées contenant du dioxyde de carbone, ledit générateur comprenant au moins un compresseur d'un fluide contenant au moins ledit comburant avec au moins un étage de compression, au moins un moyen de combustion et au moins une turbine de détente, caractérisé en ce que le fluide comprimé comprend en outre des fumées contenant du dioxyde de carbone et en ce que le générateur comprend des moyens d'absorption du dioxyde de carbone présent dans le fluide comprimé avant que ledit fluide ne soit introduit dans ledit moyen de combustion.

Le compresseur peut comprendre au moins deux étages de compression et les moyens d'absorption peuvent être disposés entre deux étages successifs de compression.

Les moyens d'absorption peuvent être placés entre le compresseur et le moyen de combustion.

De manière avantageuse, le générateur peut comprendre des moyens de recyclage d'au moins une partie des fumées en amont du compresseur.

Les moyens de recyclage peuvent être associés à des moyens d'échange de chaleur pour le refroidissement des fumées.

Le moyen de combustion peut comprendre des brûleurs catalytiques.

Préférentiellement, les moyens d'absorption sont choisis dans le groupe constitué par les colonnes utilisant des solvants chimiques, les colonnes utilisant des solvants physiques, les colonnes utilisant des solvants hybrides (mixtes), la distillation cryogénique, les membranes, les techniques d'adsorption sur tamis moléculaires.

D'autres caractéristiques et avantages de la présente invention apparaîtront à la lecture ci-après d'une description non limitative de l'invention en se référant aux figures annexées sur lesquelles les organes similaires sont désignés par les mêmes chiffres de référence, et où :
- la figure 1 illustre, selon l'art antérieur, le schéma d'un générateur électrique intégrant une turbine à gaz et un dispositif de captation du CO2 contenu dans les fumées de combustion issues de ladite turbine,
- la figure 2 illustre un premier mode de réalisation d'un générateur intégrant selon l'invention un dispositif de captation de CO2,
- la figure 3 illustre un deuxième mode de réalisation d'un générateur intégrant selon l'invention un dispositif de captation de CO2.

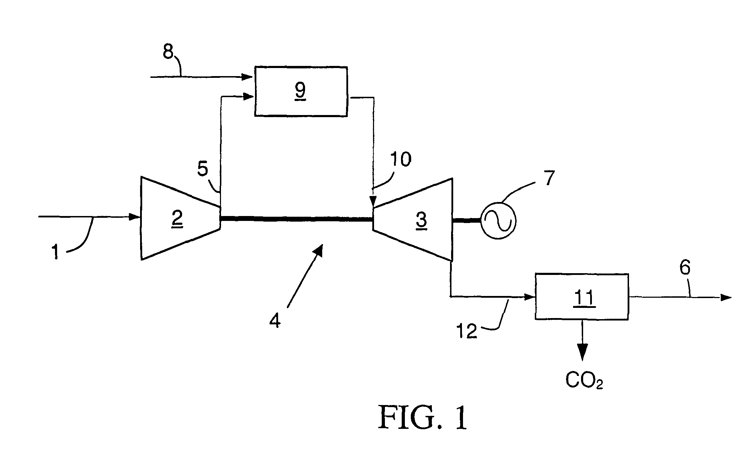

La figure 1 est représentative d'une installation selon l'art antérieur comprenant un générateur de puissance de type turbine dans lequel est brûlé un combustible hydrocarboné liquide ou gazeux (dans les exemples donnés par la suite, du gaz naturel), suivi d'un dispositif d'absorption du CO2.
Ce générateur se compose d'une turbine à gaz 4 intégrant un compresseur 2 comprenant au moins un étage de compression, une chambre de combustion 9 et une turbine de détente 3 fournissant l'énergie nécessaire pour l'entraînement du compresseur 2 et d'un alternateur 7.
Le comburant, ici sous forme d'air, arrive dans le compresseur 2 par une entrée 1, puis y est comprimé. Cet air comprimé est ensuite introduit par une ligne 5 dans la chambre de combustion 9 et permet la combustion d'un combustible gazeux introduit par une ligne 8. Les fumées ou gaz chauds issus de cette combustion progressent via une liaison 10 vers la turbine de détente 3. En sortie de cette turbine, les fumées sont ensuite acheminées par une ligne 12 dans un dispositif connu d'absorption 11 du CO2. Une fois débarrassées d'une partie substantielle de ce CO2, les fumées sont rejetées dans l'atmosphère par un moyen 6 alors que le CO2 est collecté et traité par tous moyens connus.
En général, il est courant de récupérer au moins une partie de la chaleur desdites fumées dans un dispositif de génération de vapeur par exemple pour une utilisation en co-génération ou en cycle combiné. Il est également possible de réchauffer l'air comprimé passant dans la ligne 5 par échange de chaleur avec lesdites fumées.
Ainsi qu'il a été précédemment souligné, l'absorption du CO2 doit être effectuée, suivant ce procédé, à la pression atmosphérique sur des volumes importants de fumées présentant une faible teneur en CO2 et nécessite donc des installations encombrantes et coûteuses.

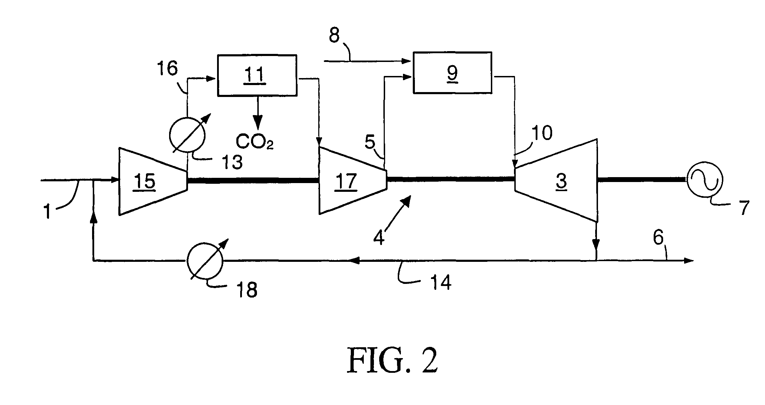

La figure 2 illustre un premier mode de réalisation de l'invention dans laquelle la turbine 4 comprend un compresseur à au moins deux étages de compression 15 et 17, une chambre de combustion 9 alimentée en combustible par la ligne 8 et une turbine de détente 3 fournissant l'énergie nécessaire pour l'entraînement du compresseur et d'un alternateur 7.
Un mélange gazeux comprenant un comburant, tel que de l'air, et une partie des fumées résultant de la combustion dans la chambre 9 arrive par l'entrée 1 et est comprimé par le premier étage de compression 15 à une pression comprise entre environ 2 et environ 10 bars, puis passe dans une conduite 16 et traverse ensuite un dispositif d'absorption 11 du CO2.
Au sens de la présente invention, le dispositif d'absorption du CO2 pourra être basé sur tout procédé connu et ne sera donc pas décrit.
Par exemple, il pourra être basé sur l'utilisation de solvants chimiques (amines ou carbonate de potassium), selon un dispositif comparable à celui décrit dans le brevet EP 744 987-B1 ou la demande brevet internationale WO 00/57990, sur l'utilisation de solvants physiques, de solvants hybrides (mixtes), sur l'utilisation de la distillation cryogénique, de membranes, et plus particulièrement de membrane à perméation gazeuse ou sur l'utilisation des techniques d'adsorption par exemple sur tamis moléculaires. Ces procédés sont par exemple décrits dans « Natural gas : production, processing, transport » (A. Rojey et C. Jaffret), Editions Technip, Paris, 1997.
Un échangeur 13, généralement désigné par l'homme du métier sous le terme anglo-saxon « intercooler », permet avantageusement de diminuer la température du mélange gazeux issu du compresseur avant son entrée dans le dispositif d'absorption 11.
Le mélange gazeux comburant débarrassé d'une partie substantielle du dioxyde de carbone est recomprimé dans le deuxième étage de compression 17 à une pression en générale comprise entre environ 10 et environ 40 bars, puis envoyé dans la chambre de combustion 9 pour permettre la combustion du combustible gazeux introduit par la ligne 8. Les fumées générées par cette combustion sont envoyées par la ligne 10 vers la turbine de détente 3. En sortie de la turbine de détente 3, une partie variable des fumées de combustion est recyclée par une ligne 14 en amont du premier étage de compression 15 (dans le sens de circulation du comburant dans la turbine 4) et mélangé à une quantité ajustée de comburant frais. Un échangeur 18 placé sur la ligne 14 permet de refroidir les fumées recyclées à une température proche de celle du comburant frais.
Sans sortir du cadre de l'invention, il est possible de récupérer au moins une partie de la chaleur desdites fumées dans un dispositif de génération de vapeur par exemple pour une utilisation en co-génération ou en cycle combiné. Il est également possible de réchauffer l'air sous pression passant dans la ligne 5 par échange de chaleur avec lesdites fumées.
Le procédé et/ou le dispositif selon l'invention présentent l'avantage d'être simple, robuste, efficace et économiquement intéressant car il ne nécessite pas d'équipements particuliers et/ou coûteux pour réaliser l'étape d'absorption du CO2. En particulier, la recirculation des fumées dans la turbine 4 couplée à la compression du mélange comburant-fumées dans l'étage 15 assure une pression partielle en CO2 relativement importante dans ledit mélange et un volume de gaz à traiter en amont de la zone de combustion faible. En conséquence, le présent procédé et/ou dispositif permet une efficacité importante de l'absorption du dioxyde de carbone pour un coût et un encombrement réduit.

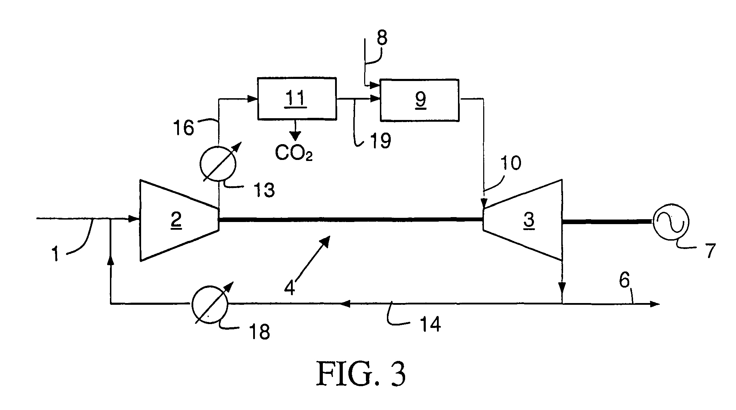

La figure 3 illustre un autre mode de réalisation de l'invention dans lequel l'extraction du CO2 sur le mélange comburant-fumées recyclées par le dispositif 11 est effectuée en sortie du compresseur 2, ici à un étage de compression, et avant la combustion dans la chambre 9. Le transfert du mélange gazeux sensiblement débarrassé du CO2 entre le dispositif d'absorption 11 et la chambre de combustion 9 est assurée par une liaison 19.
Comme pour l'exemple décrit en relation avec la figure 2, les fumées issues de la chambre de combustion parviennent à la turbine 3 par la ligne 10 et, en sortie de turbine 3, une partie variable des fumées de combustion est recyclée par la ligne 14 en amont du compresseur 2 pour être mélangée à une quantité ajustée de comburant frais. Egalement, un échangeur 18 placé sur la ligne 14 permet de refroidir les fumées recyclées à une température proche de celle du comburant frais.
Comme précédemment mentionné, il est aussi possible de récupérer au moins une partie de la chaleur desdites fumées dans un dispositif de génération de vapeur par exemple pour une utilisation en co-génération ou en cycle combiné. Il est également possible de réchauffer l'air sous pression passant dans la ligne 19 par échange de chaleur avec lesdites fumées.

Sans sortir du cadre de l'invention, plusieurs modes de fonctionnement du procédé et/ou du dispositif selon l'invention sont possibles :
- on utilise comme comburant de l'air en entrée 1 du compresseur. Ainsi, en fonction du taux de fumées recyclées par la ligne 14, on utilisera soit une chambre de combustion conventionnelle comprenant un brûleur à flamme si le taux d'oxygène dans le mélange air/fumées recyclées est relativement important, soit une chambre de combustion catalytique si ledit taux est relativement faible.
   Des simulations effectuées par le demandeur ont montré que, si le taux de recyclage des fumées par la ligne 14 est supérieur à environ 40% du volume total des gaz, le taux d'oxygène dans le mélange air-fumées recyclées en entrée de la zone de combustion 11 n'est pas suffisant pour assurer la stabilité de la flamme de combustion.
   Selon un mode de réalisation avantageux, on utilisera dans ce cas une chambre comprenant un brûleur à combustion catalytique d'un type connu pour assurer une combustion stable, de préférence de type monolithe et tel que décrit dans les demandes de brevets européens EP784603, EP784187 ou EP784188.
- on utilise comme comburant de l'air enrichi en oxygène, comprenant en général entre 22 % et 95% molaire d'oxygène, souvent d'environ 40 à environ 90% et de préférence entre 60 et 90% molaire d'oxygène. La chambre de combustion comprend également dans ce cas un brûleur à combustion catalytique.
   L'utilisation d'une chambre de combustion catalytique permet avantageusement de recycler et donc de traiter une grande majorité des fumées issues de la combustion. Le taux de recyclage des fumées sera dans ce cas habituellement compris entre environ 40% et environ 99 % et de préférence compris entre 70 % et 99 %.

Sans sortir du cadre de l'invention il est possible d'appliquer les mêmes principes et dispositifs à un cycle connu de l'homme du métier de turbine à gaz à récupérateur.

Le demandeur a réalisé des essais dont les résultats sont les suivants :

### Exemple 1 (selon l'art antérieur) :

Un dispositif analogue à celui décrit en relation avec la figure 1 est utilisé dans cet exemple.
Selon la simulation réalisée par le demandeur, l'air arrive par l'entrée 1 avec un débit de 65900 kmol/h (kilomoles par heure). Le combustible est constitué de gaz naturel introduit dans la chambre 9 par la conduite 8 avec un débit de 2150 kmol/h. A l'entrée de la turbine de détente 3, les fumées sont à une température proche de 1300°C.
En sortie de la turbine de détente, et en entrée du dispositif d'absorption 11, le débit molaire des fumées à traiter est de 68000 kmol/h et le débit du dioxyde de carbone contenu dans lesdites fumées est de 2150 kmol/h. Le rendement électrique de la turbine à gaz (par rapport au Pci (pouvoir calorifique inférieur) du combustible) calculé pour ce mode de réalisation, sans étape d'absorption du gaz carbonique, est d'environ 32% pour une puissance électrique de 163 MWatts. Les émissions de CO2 sont de 581 grammes de CO2 par kWh (kilowattheure).

### Exemple 2 (selon l'invention) :

Un dispositif analogue à celui décrit en relation avec la figure 2 est utilisé dans cet exemple.
Selon la simulation réalisée par le demandeur, l'air arrive par l'entrée 1 avec un débit de 21970 kmol/h (kilomoles par heure). Le combustible est constitué de gaz naturel introduit dans la chambre 9 par la conduite 8 avec un débit de 2306 kmol/h. L'air total introduit est mélangé en amont du compresseur avec des fumées froides recyclées issues de l'échangeur 18 et dont le débit est de 28160 kmol/h (correspondant à un taux de recyclage d'environ 60% des fumées).
Le mélange est comprimé à 10 bars entre deux étages successifs du compresseur. Le mélange comprimé est refroidi à 50°C puis passe dans le moyen d'absorption 11 qui est une colonne dans lequel une circulation liquide à contre courant d'amine, et du gaz comprimé est effectuée. La colonne est dimensionnée de telle façon que 90% du CO2 contenu dans le mélange est absorbé. Le mélange débarrassé de la majorité de son CO2 est ensuite recomprimé dans l'étage suivant de compression 17 puis mélangé avec le combustible, et envoyé sensiblement dans sa totalité, c'est à dire à des taux supérieurs à 98% dans la chambre de combustion 9 équipée de brûleurs catalytiques.
Les fumées dont la température est d'environ 1300°C sont introduites à l'entrée de la turbine de détente 3. En sortie de la turbine de détente, le débit molaire des fumées traitées est de 48470 kmol/h dont 60% est recyclé vers le compresseur. Le débit de dioxyde de carbone rejeté est, dans ce cas, d'environ 1026 kmol/h. Le rendement électrique calculé dans ce mode de réalisation est de 32,2% pour une puissance électrique de 180,2 MWatts. Les émissions de CO2 sont de 249 grammes de CO2 par kWh (kilowattheure).

### Exemple 3 (selon l'invention) :

Un dispositif analogue à celui décrit en relation avec la figure 2 est utilisé dans cet exemple. Les conditions expérimentales sont les mêmes que ceux décrits dans l'exemple 2, mais dans l'exemple 3, de l'air enrichi en oxygène (82% molaire d'oxygène) est utilisé et arrive par l'entrée 1 avec un débit de 5610 kmol/h. Le combustible est constitué de gaz naturel introduit dans la chambre 9 par la conduite 8 avec un débit de 2306 kmol/h. L'air total introduit est mélangé en amont du compresseur avec des fumées froides recyclées dont le débit est de 49010 kmol/h issues de l'échangeur 18 (correspondant à un taux de recyclage d'environ 98% des fumées).
En sortie de la turbine de détente, le débit molaire des fumées traitées est de 50180 kmol/h dont 98% est recyclé vers le compresseur. Le débit de dioxyde de carbone rejeté est dans ce cas d'environ 59 kmol/h. Le rendement électrique calculé dans ce mode de réalisation est de 31,5% pour une puissance électrique de 179,2 MWatts. Les émissions de CO2 sont de 15 grammes de CO2 par kWh (kilowattheure).

Le tableau ci-après résume les résultats obtenus pour les trois exemples décrits précédemment.

| Exemple | Efficacité (%) | Puissance électrique (MWatts) | CO2 rejeté (g_{CO2}/kWh) |
|---|---|---|---|
| 1 | 32 | 163 | 581 |
| 2 | 32,2 | 180,2 | 249 |
| 3 | 31,5 | 179,2 | 15 |

Grâce à l'invention, il est ainsi possible de maintenir le rendement électrique calculé d'un générateur de puissance à un sensiblement niveau constant tout en diminuant fortement les émissions de dioxyde de carbone.

## Revendications

1. Procédé permettant de diminuer le taux de dioxyde de carbone (CO2) présent dans les fumées rejetées par un générateur de puissance brûlant un mélange d'un comburant et d'un combustible contenant des hydrocarbures, **caractérisé en ce qu'**il comprend au moins les étapes suivantes :
a) on comprime un mélange gazeux comprenant au moins une partie dudit comburant et au moins une partie desdites fumées,
b) on élimine par absorption tout ou partie du CO2 présent dans le mélange gazeux comprimé,
c) on mélange un combustible avec le mélange gazeux et on fait brûler ce mélange combustible/mélange gazeux,
d) on détend les fumées issues de la combustion.

2. Procédé selon la revendication 1, dans lequel on mélange avec le comburant au moins une partie des fumées issues de l'étape d) pour former le mélange gazeux de l'étape a).

3. Procédé selon la revendication 1, dans lequel on effectue l'étape b) d'absorption entre deux étages successifs de compression du mélange gazeux.

4. Procédé selon la revendication 1, dans lequel on effectue l'étape b) d'absorption à la sortie du compresseur.

5. Procédé selon l'une des revendications 1 à 4, dans lequel on recycle au moins 40% du volume total des fumées refroidies.

6. Procédé selon la revendication 1 ou 4, dans lequel on effectue dans l'étape c) une combustion catalytique.

7. Procédé selon la revendication 5, dans lequel on mélange avec les fumées recyclées, sensiblement la quantité d'oxygène stoechiométrique nécessaire à la combustion.

8. Procédé selon la revendication 1 à 7, dans lequel le comburant est de l'air enrichi en oxygène.

9. Procédé selon la revendication 1 à 7 dans lequel le comburant est de l'air.

10. Générateur de puissance brûlant un mélange d'un comburant et d'un combustible contenant des hydrocarbures et rejetant des fumées contenant du dioxyde de carbone, ledit générateur comprenant au moins un compresseur (2; 15, 17) d'un fluide contenant au moins ledit comburant avec au moins un étage de compression, au moins un moyen de combustion (9) et au moins une turbine de détente (3), **caractérisé en ce que** le fluide comprimé comprend en outre des fumées contenant du dioxyde de carbone et **en ce que** le générateur comprend des moyens d'absorption (11) du dioxyde de carbone présent dans le fluide comprimé avant que ledit fluide ne soit introduit dans ledit moyen de combustion.

11. Générateur selon la revendication 10, dans lequel ledit compresseur comprend au moins deux étages de compression (15, 17) et dans lequel les moyens d'absorption (11) sont disposés entre deux étages successifs de compression.

12. Générateur selon la revendication 10, dans lequel lesdits moyens d'absorption sont placés entre le compresseur (2 ; 15, 17) et le moyen de combustion (9).

13. Générateur selon l'une quelconque des revendications 10 à 12, comprenant des moyens de recyclage (14) d'au moins une partie des fumées en amont du compresseur.

14. Générateur selon la revendication 13, dans lequel les moyens de recyclage sont associés à des moyens d'échange de chaleur (18) pour le refroidissement des fumées.

15. Générateur selon l'une quelconque des revendications 10 à 13, dans lequel le moyen de combustion (9) comprend des brûleurs catalytiques.

16. Générateur selon l'une quelconque des revendications 10 à 14, dans lequel les moyens d'absorption (11) sont choisis dans le groupe constitué par les colonnes utilisant des solvants chimiques, les colonnes utilisant des solvants physiques, les colonnes utilisant des solvants hybrides (mixtes), la distillation cryogénique, les membranes, les techniques d'adsorption sur tamis moléculaires.

## Claims

1. A method enabling the reduction of the level of carbon dioxide (CO₂) present in the fumes expelled by a power generator burning a mixture of a combustive agent and a fuel containing hydrocarbons, **characterised in that** it includes at least the following steps:
a) compressing a gaseous mixture including at least a part of said combustive agent and at least a part of said fumes,
b) eliminating, by absorption, all or part of the CO₂ present in the compressed gaseous mixture,
c) mixing a fuel with the gaseous mixture and burning this mixture of fuel/ gaseous mixture,
d) expanding the fumes produced by the combustion.

2. The method according to Claim 1, in which at least a part of the fumes produced by step d) is mixed with the combustive agent in order to form the gaseous mixture of step a).

3. The method according to Claim 1, in which step b) of absorption is performed between two successive stages of compression of the gaseous mixture.

4. The method according to Claim 1, in which step b) of absorption is performed at the exit of the compressor.

5. The method according to one of Claims 1 to 4, in which at least 40% of the total volume of the cooled fumes is recycled.

6. The method according to Claim 1 or 4, in which catalytic combustion is performed in step c).

7. The method according to Claim 5, in which substantially the stoichiometric quantity of oxygen required for combustion is mixed with the recycled fumes.

8. The method according to Claims 1 to 7, in which the combustive agent is oxygen-enriched air.

9. The method according to Claims 1 to 7, in which the combustive agent is air.

10. A power generator burning a mixture of a combustive agent and a fuel containing hydrocarbons and expelling fumes containing carbon dioxide, said generator including at least one compressor (2; 15, 17) for a fluid containing at least said combustive agent with at least one compression stage, at least one combustion means (9) and at least one expansion turbine (3), **characterised in that** the compressed fluid further includes fumes containing carbon dioxide and **in that** the generator includes absorption means (11) for the carbon dioxide present in the compressed fluid before said fluid is introduced into said combustion means.

11. The generator according to Claim 10, in which said compressor includes at least two compression stages (15, 17) and in which the absorption means (11) are arranged between two successive compression stages.

12. The generator according to Claim 10, in which said absorption means are placed between the compressor (2; 15, 17) and the combustion means (9).

13. The generator according to any one of Claims 10 to 12, including recycling means (14) for at least a part of the fumes upstream of the compressor.

14. The generator according to Claim 13, in which the recycling means are associated with heat exchange means (18) for cooling the fumes.

15. The generator according to any one of Claims 10 to 13, in which the combustion means (9) includes catalytic burners.

16. The generator according to any one of Claims 10 to 14, in which the absorption means (11) are selected from the group constituted by columns using chemical solvents, columns using physical solvents, columns using hybrid (mixed) solvents, cryogenic distillation, membranes and adsorption techniques on molecular sieves.

## Patentansprüche

1. Verfahren, mit Hilfe dessen der Gehalt an Kohlendioxid (CO₂) in den Abgasen einer Krafterzeugungsmaschine, in welcher eine Mischung aus einem Sauerstoffträger und einem Brennstoff, der Kohlenwasserstoffe enthält, verbrannt wird, verringert werden kann, **dadurch gekennzeichnet, dass** es mindestens einen der folgenden Schritte umfasst:
a) Komprimieren eines Gasgemisches, das mindestens einen Teil des Sauerstoffträgers und mindestens einen Teil des Abgase enthält,
b) vollständiges oder teilweises Entfernen des CO₂, welches in dem komprimierten Gasgemisch enthalten ist, durch Absorption,
c) Mischen eines Brennstoffs mit dem Gasgemisch und Verbrennen dieses Gemisches aus Brennstoff und Gasgemisch,
d) Entspannen der Abgase, die aus dieser Verbrennung stammen.

2. Verfahren nach Anspruch 1, wobei mindestens ein Teil der aus Schritt d) stammenden Abgase mit dem Sauerstoffträger gemischt werden, um das Gasgemisch des Schritts a) zu bilden.

3. Verfahren nach Anspruch 1, wobei der Absorptionsschritt b) zwischen zwei aufeinander folgenden Kompressionsstufen des Gasgemisches durchführt wird.

4. Verfahren nach Anspruch 1, wobei der Absorptionsschritt b) an der Austrittsseite des Kompressors durchgeführt wird.

5. Verfahren nach einem der Ansprüche 1 bis 4, wobei mindestens 40 % des Gesamtvolumens der erkalteten Abgase zurückgeführt werden.

6. Verfahren nach Anspruch 1 oder 4, wobei in Schritt c) eine katalytische Verbrennung durchgeführt wird.

7. Verfahren nach Anspruch 5, wobei die zurückgeführten Abgase spürbar mit einer derjenigen Menge an Sauerstoff gemischt werden, die stöchiometrisch zur Verbrennung erforderlich ist.

8. Verfahren nach Anspruch 1 bis 7, wobei es sich bei dem Sauerstoffträger um mit Sauerstoff angereicherte Luft handelt.

9. Verfahren nach Anspruch 1 bis 7, wobei es sich bei dem Sauerstoffträger um Luft handelt.

10. Krafterzeugungsmaschine, in welcher eine Mischung aus einem Sauerstoffträger und einem kohlenwasserstoffhaltigen Brennstoff verbrannt wird und welche kohlendioxidhaltige Abgase ausstößt, wobei die Krafterzeugungsmaschine mindestens einen Kompressor (2; 15, 17) mit mindestens einer Kompressionsstufe für ein Fluid, das mindestens den Sauerstoffträger enthält, sowie mindestens ein Verbrennungsmittel (9) und mindestens eine Entspannungsturbine (3) umfasst und **dadurch gekennzeichnet ist, dass** das komprimierte Fluid unter anderem kohlendioxidhaltige Abgase enthält und dass die Krafterzeugungsmaschine Mittel (11) umfasst, die dazu dienen, das im komprimierten Fluid enthaltene Kohlendioxid zu absorbieren, bevor das komprimierte Fluid in das Verbrennungsmittel gelangt.

11. Krafterzeugungsmaschine nach Anspruch 10, wobei der Kompressor mindestens zwei Kompressionsstufen (15, 17) umfasst und sich die Absorptionsmittel (11) zwischen zwei aufeinander folgenden Kompressionsstufen befinden.

12. Krafterzeugungsmaschine nach Anspruch 10, wobei sich die Absorptionsmittel zwischen dem Kompressor (2; 15, 17) und dem Verbrennungsmittel (9) befinden.

13. Krafterzeugungsmaschine nach einem der Ansprüche 10 bis 12, die Rückführungsmittel (14) umfasst, mit denen mindestens ein Teil der Abgase zur Eintrittöffnung des Kompressors zurückgeleitet wird.

14. Krafterzeugungsmaschine nach Anspruch 13, wobei die Rückführungsmittel mit Wärmetauschmitteln (18) zur Abkühlung der Abgase in Verbindung stehen.

15. Krafterzeugungsmaschine nach einem der Ansprüche 10 bis 13, wobei das Verbrennungsmittel (9) katalytische Brenner umfasst.

16. Krafterzeugungsmaschine nach einem der Ansprüche 10 bis 14, wobei die Absorptionsmittel (11) aus der Gruppe ausgewählt werden, die aus Kolonnen auf Basis chemischer Lösemittel, Kolonnen auf Basis physikalischer Lösemittel, Kolonnen auf Basis von Hybridlösemitteln (Mischungen), Kryodestillation, Membranen sowie Absorptionstechniken über Molekularsiebe besteht.
